Europäisches Patentamt

European Patent Office

Office européen des brevets

(11) Publication number: **0 506 031 A1**

# EUROPEAN PATENT APPLICATION

(21) Application number: **92105163.7**

(22) Date of filing: **25.03.92**

(51) Int. Cl.5: **H04N 5/217**

(30) Priority: **27.03.91 JP 62858/91**

(43) Date of publication of application:
**30.09.92 Bulletin 92/40**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Mimura, Hidetoshi**
**6-13-505, Youkoudai-5-chome, Isogo-ku**
**Yokohama-shi(JP)**
Inventor: **Kogane, Haruo**
**16-5, Ikuta-1-chome, Tama-ku**
**Kawasaki-shi(JP)**

(74) Representative: **Patentanwälte Leinweber & Zimmermann**
**Rosental 7/II Aufg.**
**W-8000 München 2(DE)**

(54) **Illumination flicker correction for video cameras.**

(57) A flicker correcting circuit for reducing a large, rapid change in signal level generated in a case where a CCD television camera or the like is operated in the shutter mode, and for obtaining a flickerless, high-quality video signal for an object illuminated with a fluorescent lamp, is disclosed, in which the level of a video signal from a CCD (1) is detected at each field by a signal processor (4), and a microcomputer (5) controls a shutter pulse generating circuit (6) so that a shutter pulse for controlling the charge storage period of the CCD is delivered from the shutter pulse generating circuit to the CCD in accordance with the detected level at each field.

**FIG. 2**

## BACKGROUND OF THE INVENTION

### 1. Field of the invention

The present invention relates to a flicker correcting circuit for reducing the flicker of a video signal which is obtained by a CCD television camera or the like at a place illuminated with a fluorescent lamp.

### 2. Description of the Prior Art

An example of conventional flicker correcting circuits is disclosed in a Japanese patent application JP-A-62-123,880.

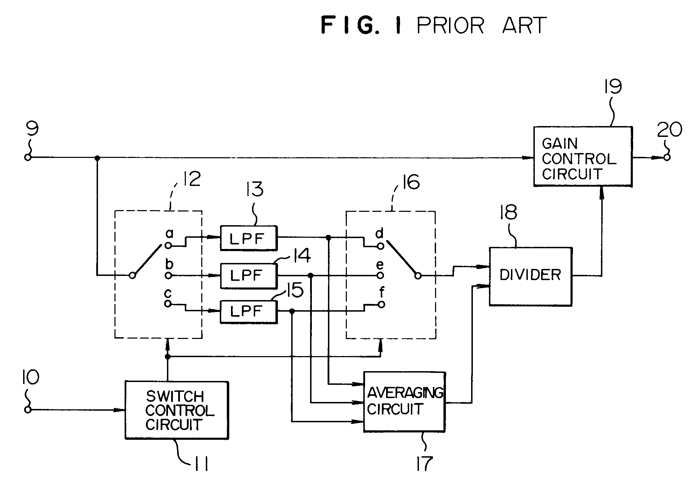

In this example, as shown in Fig. 1 of the accompanying drawings, fixed contacts a, b and c of a switching circuit 12 are successively put in contact with the movable contact thereof by a switch control circuit 11 in the order of a, b, c, a, ---, in synchronizm with a vertical synchronizing signal supplied to an input terminal 10. Simultaneously with the above changeover action of the switching circuit 12, fixed contacts d, e and f of another switching circuit 16 are successively put in contact of the movable contact thereof in the order of d, e, f, e, ---. A video signal supplied to another input terminal 9 is applied to one of the fixed contacts a, b and c of the switching circuit 12 in synchronism with the vertical synchronizing signal. The fixed contacts a, b and c of the switching circuit 12 are connected to the fixed contacts d, e and f of the switching circuit 16 through LPF's (low pass filters) 13, 14 and 15, respectively. For example, the video signal applied to the fixed contact a is therefore supplied to the fixed contact d through the LPF 13, and is then applied to a divider 18 through the movable contact of the switching circuit 16. Simultaneously, the divider 18 is applied with a mean signal level outputted from an averaging circuit 17, in which video signals having passed through the LPF's 13, 14 and 15 are averaged. In the divider 18, the signal level of the video signal from the fixed contact d is compared with the mean signal level from the averaging circuit 17 to determine a correction value, which is applied to a gain control circuit 19 to correct the level of the video signal supplied directly from the input terminal 9.

As mentioned above, in the conventional flicker correcting circuit, the gain of the gain control circuit 19 is automatically controlled in accordance with the level of an applied video signal to reduce the flicker of the video signal.

In a case where a CCD television camera is operated in the shutter mode, however, the level of the video signal obtained by the CCD television camera changes greatly and rapidly, and the conventional flicker correcting circuit cannot follow such a large, rapid change in signal level. Thus, there arises a problem that the conventional flicker correcting circuit fails to reduce the flicker of the video signal in a marked degree.

## SUMMARY OF THE INVENTION

It is an object of the present invention to provide a flicker correcting circuit which can solve the above-mentioned problem of the prior art, which can correct a large, rapid change in signal level generated in a case where a CCD television camera is operated in the shutter mode, and which can produce a flickerless, high-quality video signal even for an object illuminated with a fluorescent lamp.

In order to attain the above object, according to the present invention, there is provided a flicker correcting circuit which comprises: a solid-state imaging element; a shutter pulse generating circuit for sending out a shutter pulse to the solid-state imaging element; a signal processor for detecting the level of a video signal at each field, the video signal being delivered from the solid-state imaging element; and control means for causing the shutter pulse generating circuit to send out the shutter pulse at each field in accordance with the detected signal level, to control the charge storage period of the solid-state imaging element.

A flicker correcting circuit according to the present invention has the above-mentioned circuit configuration, and thus performs the following operation. That is, the level of the video signal delivered from the solid-state imaging element is detected by the signal processor at each field, and the control means controls the shutter pulse generating circuit in accordance with the detected level so that a shutter pulse for controlling the charge storage period of the solid-state imaging element is appropriately generated at each field.

Thus, even a large, rapid change in signal level generated in a case where the solid-state imaging element is operated in the shutter mode, can be corrected, and a flickerless, high-quality video signal can be obtained for an object illuminated with a fluorescent lamp.

## BRIEF DESCRIPTION OF THE DRAWINGS

Fig. 1 is a block diagram showing the circuit configuration of a conventional flicker correcting circuit.

Fig. 2 is a block diagram showing the circuit configuration of an embodiment of a flicker correcting circuit according to the present invention.

Fig. 3 is a schematic diagram which shows different signal levels at a plurality of fields due to the flicker of a video signal, to explain the operation of the embodiment of Fig. 1.

Fig. 4 is a waveform chart which shows a time when a shutter pulse is generated in the shutter pulse generating circuit, to explain the operation of the embodiment of Fig. 2.

## DESCRIPTION OF THE PREFERRED EMBODIMENT

Now, the circuit configuration of an embodiment of a flicker correcting circuit according to the present invention will be explained below, with reference to the drawings.

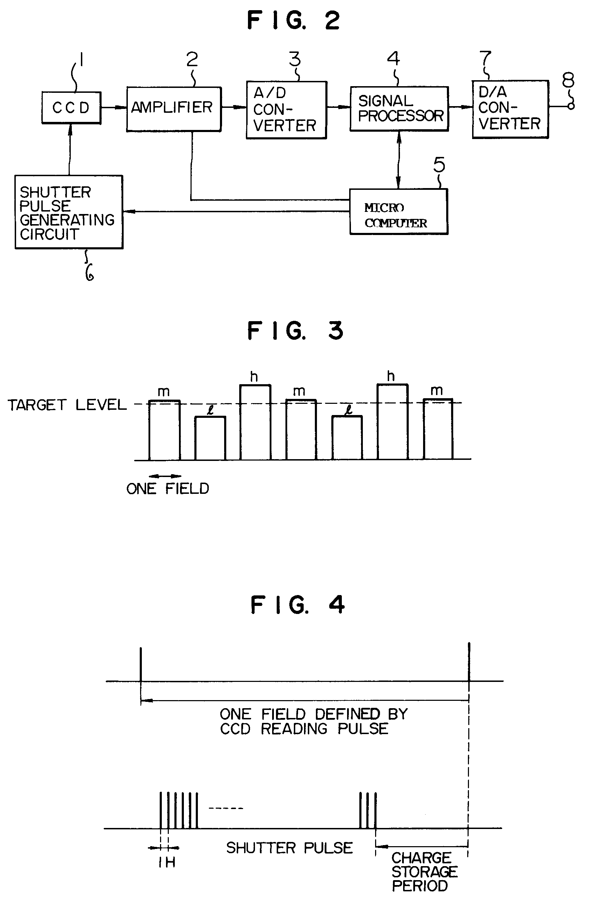

In Fig. 2, reference numeral 1 designates a CCD (namely, charge coupled device) for converting light from an object to be imaged, into an electric signal, 2 an amplifier for amplifying a video signal from the CCD 1, 3 an analog-digital converter, 4 a signal processor, 5 a microcomputer for controlling the amplifier 2 and a shutter pulse generating circuit 6 on the basis of data from the signal processor 4, and 7 a digital-analog converter for delivering an analog video signal to an output terminal 8. The shutter pulse generating circuit 6 supplies the CCD 1 with a shutter pulse for controlling the charge storage period of the CCD 1, under control of the microcomputer 5.

Next, the operation of the present embodiment will be explained.

A video signal which is obtained at a place illuminated with a fluorescent lamp and thus contains a flicker component, has a waveform that a signal portion having the form of a staircase is repeated at intervals of three fields. In the signal processor 4, the signal level of the video signal is calculated at each field. The signal level thus obtained is sent to the microcomputer 5. In the microcomputer 5, the signal level supplied from the signal processor 4, for example, a level $m$ is compared with a predetermined target level to determine a correction value. Further, the microcomputer 5 controls the shutter pulse generating circuit 6 and the amplifier 2 so that the correction value is reflected in a signal portion which appears when a time corresponding to three fields has elapsed.

As shown in Fig. 4, the shutter pulse generating circuit 6 generates a shutter pulse for each of read pulses which are used to read out one field of the video signal from the CCD 1, and the generation time of the shutter pulse can be changed at intervals of 1H (namely, one horizontal scanning period).

The microcomputer 5 controls the shutter pulse generating circuit 6 so as to generate a shutter pulse capable of making the difference between the signal level calculated by the signal processor 4 and the target level as small as possible. That is, the charge storage period which can be varied at intervals of 1H, is set so that the above level difference is made as small as possible. Further, the microcomputer 5 controls the amplifier 2 so that a level difference corresponding to a charge storage period less than 1H becomes equal to zero. Such level control for the video signal is performed at each field, and the same control operation is repeated at intervals of three fields.

As mentioned above, according to the present embodiment, the shutter pulse generating circuit 6 and the amplifier 2 are controlled by the microcomputer 5 so that a signal level at each field becomes equal to a target level, and thus the flicker which is generated at a place illuminated with a fluorescent lamp, can be reduced in a great degree.

Further, according to the present embodiment, the charge storage period of the CCD 1 is controlled directly, and thus even a large, rapid change in signal level can be reduced in a great degree.

## Claims

1. A flicker correcting circuit comprising:
   a solid-state imaging element (1);
   a shutter pulse generating circuit (6) for sending out a shutter pulse to the solid-state imaging element;
   a signal processor (4) for detecting the level of a video signal at each field, the video signal being delivered from the solid-state imaging element; and
   control means (5) for causing the shutter pulse generating circuit to send out the shutter pulse at each field in accordance with the detected level, to control the charge storage period of the solid-state imaging element.

2. A flicker correcting circuit comprising:
   a solid-state imaging element (1);
   a shutter pulse generating circuit (6) for sending out a shutter pulse to the solid-state imaging element;
   an amplifier (2) for amplifying a video signal delivered from the solid-state imaging element;
   a signal processor (4) for detecting the level of the output signal of the amplifier at each field; and
   control means (5) for causing the shutter pulse generating circuit to send out the shutter pulse at each field and for controlling the amplifier, in accordance with the detected level, the charge storage period of the solid-state imaging element being controlled by the shutter pulse.

3. A flicker correcting circuit according to Claim 1, wherein the shutter pulse for controlling the charge storage period of the solid-state imaging element in accordance with a portion of the video signal outputted therefrom is delivered from the shutter pulse generating circuit, when a time corresponding to three fields has elapsed after the signal portion was detected by the signal processor.

4. A flicker correcting circuit according to Claim 2, wherein the shutter pulse for controlling the charge storage period of the solid-state imaging element in accordance with a portion of the output signal of the amplifier is delivered from the shutter pulse generating circuit, when a time corresponding to three fields has elapsed after the signal portion was detected by the signal processor.

**F I G. I** PRIOR ART

# F I G. 2

# F I G. 3

TARGET LEVEL

ONE FIELD

# F I G. 4

ONE FIELD DEFINED BY
CCD READING PULSE

SHUTTER PULSE

IH

CHARGE
STORAGE
PERIOD

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-9 004 303 (ARNOLD & RICHTER CINE TECHNIK GMBH & CO.)<br>* page 8, line 1 - page 15, line 9 *<br>--- | 1 | H04N5/217 |
| Y | PATENT ABSTRACTS OF JAPAN<br>vol. 13, no. 317 (E-789)19 July 1989<br>& JP-A-1 086 666 ( TOSHIBA CORP. ) 31 March 1989<br>* abstract * | 1 | |
| A | --- | 3 | |
| Y | US-A-4 879 591 (TAKEI)<br>* column 7, line 48 - column 9, line 21 *<br>* figure 5 *<br>--- | 2 | |
| Y | PATENT ABSTRACTS OF JAPAN<br>vol. 6, no. 028 (E-095)19 February 1982<br>& JP-A-56 149 179 ( CANON INC. ) 18 November 1981<br>* abstract * | 2 | |
| A | --- | 4 | |
| A | US-A-4 670 787 (LEVINE)<br>* column 3, line 35 - column 6, line 8 *<br>--- | 1,2 | TECHNICAL FIELDS SEARCHED (Int. Cl.5 )<br><br>H04N5<br>H04N9<br>H04N1 |
| A | PATENT ABSTRACTS OF JAPAN<br>vol. 12, no. 101 (E-595)2 April 1988<br>& JP-A-62 232 278 ( OLYMPUS OPTICAL CO.LTD. ) 12 October 1987<br>* abstract *<br>--- | 3,4 | |
| A | PATENT ABSTRACTS OF JAPAN<br>vol. 14, no. 005 (E-869)9 January 1989<br>& JP-A-1 253 369 ( MATSUSHITA ELECTRIC IND.CORP.LTD. ) 9 October 1989<br>* abstract *<br>----- | 3,4 | |

The present search report has been drawn up for all claims

| Place of search | Date of completion of the search | Examiner |
|---|---|---|
| THE HAGUE | 27 JULY 1992 | DUHR R.H.J.E. |